# EUROPÄISCHE PATENTSCHRIFT

(11) **EP 1 772 646 B1**
(45) Veröffentlichungstag und Bekanntmachung des Hinweises auf die Patenterteilung: **23.11.2011**
(21) Anmeldenummer: 06019245.7
(22) Anmeldetag: 14.09.2006
(51) Int. Cl.: F16D 48/06

(54) **Verfahren und System zum Steuern einer Fahrzeugkupplung**
Method and system for controlling a vehicle coupling
Procédé et système de commande d'un embrayage de véhicule

(30) Priorität: 08.10.2005 DE 102005048319
(43) Veröffentlichungstag der Anmeldung: 11.04.2007
(73) Patentinhaber: Schaeffler Technologies GmbH & Co. KG, 91074 Herzogenaurach (DE)
(72) Erfinder: Warren, Robin John, Leamingten Spa CV32 6QG (GB)

(56) Entgegenhaltungen:
- EP-A- 0 918 657
- EP-A- 0 989 013
- EP-A- 1 113 198
- US-A- 5 277 286
- US-A- 5 857 443

## Beschreibung

Die Erfindung betrifft ein Verfahren und ein System zum Steuern einer zwischen einer Ausgangswelle eines Fahrzeugmotors und einer Eingangswelle des Fahrzeugs angeordneten Kupplung.

Das Dokument US 5,857,443 beschreibt ein Verfahren zur Steuerung eines automatisierten Getriebes mit Wandlerdrehmomentübertragungsvorrichtung sowie ein Verfahren zur Steuerung einer Wandlerüberbrückungskupplung nach dem Oberbegriff des Anspruchs 1.

Dokument EP 0 918 657 A offenbart ein System zur gemeinsamen Steuerung einer im Antriebsstrang eines Kraftfahrzeugs angeordneten Servokupplung und eines im Antriebsstrang angeordneten Fahrzeugmotors.

In modernen Kraftfahrzeugen, insbesondere Personenwagen, werden aus Gründen der Bedienungserleichterung und eines besseren Fahrkomforts zunehmend automatisierte Kupplungen eingesetzt. Ein Problem beim Einsatz solcher Kupplungen besteht darin, dass im Fahrbetrieb aus Verbrauchs- und Verschleißgründen die Kupplung derart betrieben bzw. betätigt werden soll, dass sie einerseits nicht oder nur sehr wenig rutscht. Wenn das Fahrzeug auf eine Geschwindigkeit abbremst, bei der der Motor unterhalb seiner Leerlaufdrehzahl läuft, muss die Kupplung dagegen geöffnet werden, so dass sie kaum Drehmoment überträgt und mit Schlupf läuft. Bekannt ist, die Kupplung bei Unterschreiten einer vorbestimmten Drehzahl, beispielsweise einer Drehzahl etwas über der Leerlaufdrehzahl des Motors zu öffnen und von einem Fahrmode in einen Anfahrmode überzugehen, in dem die Kupplung beim Gasgeben zunehmend schließt und das Fahrzeug unter Schlupfverminderung beschleunigt.

In der Praxis hat sich gezeigt, dass beim Übergang vom Fahrmode in den Anfahrmode Triebstrangschwingungen auftreten, wenn das Fahrzeug beispielsweise steil bergauf fährt und seine Geschwindigkeit unter Last soweit abnimmt, dass der Motor untertourig betrieben wird. Der Erfindung liegt die Aufgabe zugrunde, eine automatisierte Kupplungsbetätigung derart auszubilden, dass beim Übergang vom Fahrmode in den Anfahrmode keine den Fahrkomfort - beeinträchtigenden Buckelschwingungen auftreten.

Diese Aufgabe wird mit einem Verfahren zum Steuern einer zwischen einer Ausgangswelle eines Fahrzeugmotors und einer Eingangswelle des Fahrzeugs angeordneten Kupplung nach Anspruch 1 und dem entsprechenden System nach Anspruch 4 gelöst.

Die zweite kritische Drehzahl, bei deren Erreichen die Kupplung im Anfahrmodus betrieben wird, kann Null sein. Der Anfahrmodus wird dann erst bei stillstehendem Fahrzeug erreicht.

Vorteilhaft ist weiter, wenn die Kupplung bei über einem Schwellwert liegender zeitlicher Abnahme der Drehzahl der Antriebswelle des Fahrzeugs mit hohem Schlupf betrieben wird.

Ein System zum Steuern einer zwischen einer Ausgangswelle eines Fahrzeugmotors und einer Eingangswelle des Fahrzeugs angeordneten Kupplung enthält einen Aktor zum Betätigen der Kupplung, Sensoren zum Erfassen von den Betriebsparametern des Fahrzeugs und ein elektronisches Steuergerät zum Steuern des Aktors in Abhängigkeit von den Betriebsparametern des Fahrzeugs, wobei das Steuergerät den Aktor entsprechend einem oder mehreren der vorgenannten Verfahren steuert.

Die Erfindung, die bei allen Arten von automatisierten Kupplungen, beispielsweise Reibscheibenkupplungen, oder auch hydraulischen Drehmomentwandlern, vorteilhafterweise mit Lock-Up-Funktion, verwendet werden kann, wird im Folgenden anhand schematischer Zeichnungen beispielsweise und mit weiteren Einzelheiten erläutert.

In den Figuren stellen dar:
- Fig.1: schematisch einen Antriebsstrang eines Fahrzeugs und
- Fig. 2: Kurven zur Erläuterung des erfindungsgemäßen Verfahrens.

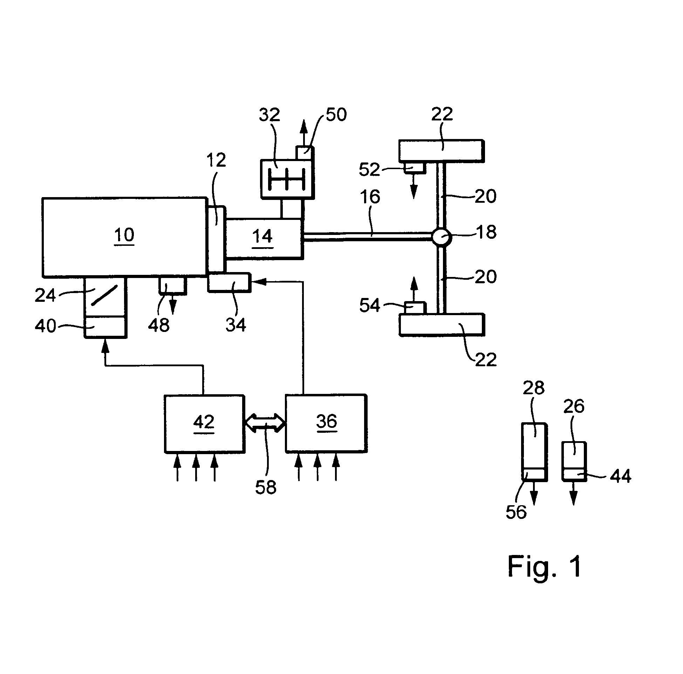

Gemäß Fig. 1 enthält ein Fahrzeugantriebsstrang einen Antriebs- bzw. Fahrzeugmotor 10, der über eine Kupplung 12 mit einem Schaltgetriebe 14 verbunden ist, das über eine Kardanwelle 16, ein Differential 18 und Antriebswellen 20 mit angetriebenen Hinterrädern 22 eines Fahrzeugs verbunden ist. Der beispielhaft als Hinterradantriebsstrang dargestellte Antriebsstrang könnte auch als Vorderradantriebsstrang oder als Allradantriebsstrang ausgebildet sein. Die Kupplung 12 verbindet die nicht dargestellte Ausgangswelle des Fahrzeugmotors 10 mit der nicht dargestellten Eingangswelle des Schaltgetriebes 14, die in Ansprüchen als Eingangswelle des Fahrzeugs bezeichnet ist.

Die Leistung des Motors 10 wird mittels eines Laststellgliedes 24, im Falle eines Ottomotors, beispielsweise einer Drosselklappe, gesteuert.

Für seine Betätigung weist das Fahrzeug ein Gaspedal 26, ein Bremspedal 28 sowie eine Schalthebelbaugruppe 32 mit einem nicht dargestellten Schalthebel zum Einlegen der Gänge auf.

Für die Betätigung der Kupplung 12 ist ein Kupplungsaktor 34 vorgesehen, der von einem Kupplungssteuergerät 36 angesteuert wird.

Im dargestellten Beispiel erfolgt die Betätigung des Laststellgliedes 24 durch ein "Drive-By-Wiresystem", in dem ein Laststellgliedaktor 40 von einem Motorsteuergerät 42 angesteuert ist, das einen Eingang aufweist, der mit einem Sensor 44 zur Erfassung der Stellung des Gaspedals 26 verbunden ist. Sensoren zum Erfassen von Betriebsparametern des Fahrzeugs sind beispielsweise ein Drehzahlsensor 48 zum Erfassen der Drehzahl einer Ausgangswelle des Fahrzeugmotors 10, ein Gangsensor 50 zur Erfassung der Stellung des Schalthebels der Schalthebelbaugruppe, Raddrehzahlsensoren 52, 54, ein Sensor 56 zur Erfassung der Betätigung des Bremspedals 28 sowie gegebenenfalls weitere Sensoren.

Die Steuergeräte 36 und 42 können getrennte Einheiten mit einem jeweiligen Prozessor und Daten- sowie Programmspeichereinrichtungen sein, die über ein Bussystem 58 kommunizieren. Die Steuergeräte können auch in unterschiedlicher Weise zusammengefasst sein oder durch ein einziges Steuergerät realisiert sein. Eingänge der Steuergeräte sind mit jeweiligen Sensoren verbunden, die die für den Ablauf der Programme notwendigen Daten liefern.

Im Kupplungssteuergerät 36 ist ein Programm abgelegt, entsprechend dem die Kupplung im normalen Fahrbetrieb entsprechend einem Fahrmode gesteuert wird, bei dem die Kupplung normalerweise schlupffrei oder nur mit sehr geringem Schlupf betrieben wird und gleichzeitig nur so stark angepresst wird, wie es für den jeweiligen Schlupf erforderlich ist. Unter Schlupf wird die Differenz zwischen der Eingangsdrehzahl der Kupplung (Ausgangswelle des Fahrzeugmotors 10) und der Ausgangswelle der Kupplung (Eingangswelle des Getriebes 14) verstanden, wobei diese Differenz oder der Absolutwert der Differenz durch die Eingangsdrehzahl oder die Ausgangsdrehzahl der Kupplung geteilt werden kann.

Insbesondere wenn das Fahrzeug bis zum Stillstand abgebremst wird, muss die Kupplung 12 geöffnet werden, damit der Fahrzeugmotor 10 mindestens mit seiner Leerlaufdrehzahl drehen kann, ohne dass ein wesentliches Drehmoment vom Fahrzeugmotor 10 in das Getriebe 14 bzw. auf die Kardenwelle 16 übertragen wird. Somit wird die Kupplungsbetätigung bei abnehmender Fahrzeuggeschwindigkeit aus dem Drehmoment übertragenden und im allgemeinen schlupfarmen Fahrmodus in einen Anfahrmodus geschaltet, in dem sie im Wesentlichen geöffnet ist und beim Anfahren, d.h. im Allgemeinen beim Gasgeben mit eingelegtem Gang, allmählich schließt, um in den schlupfarmen Fahrzustand überzugehen.

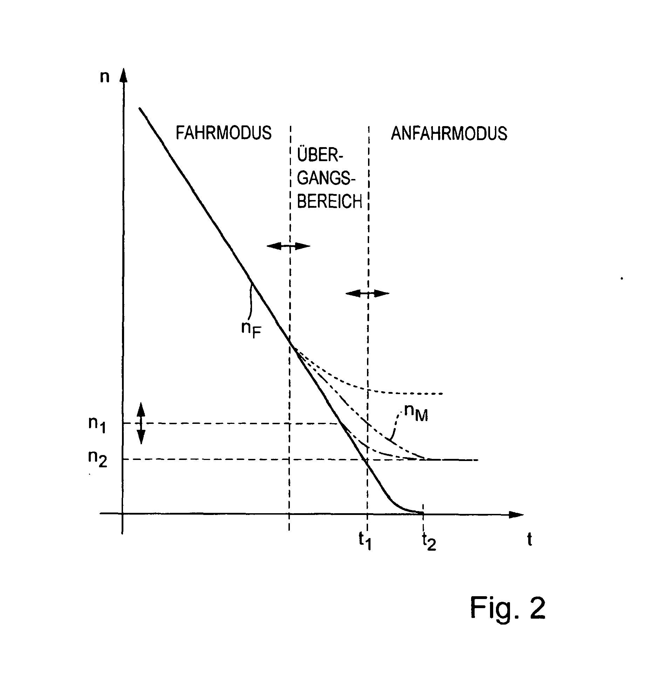

Fig. 2 zeigt, wie die Kupplung beim Verlangsamen des Fahrzeugs aus dem Fahrmodus in den Anfahrmodus übergeht:

Auf der Abszisse ist die Zeit dargestellt; die Ordinate stellt Drehzahlen dar. Die durchgezogene Kurve zeigt die Drehzahl n_{F} der Fahrzeugeingangswelle bzw. der Getriebeeingangswelle, wenn das Fahrzeug beispielsweise im dritten Gang abgebremst wird und seine zur Drehzahl n_{F} proportionale Geschwindigkeit abnimmt. Zum Zeitpunkt t₁ erreicht n_{F} eine kritische Drehzahl n₂, beispielsweise die Leerlaufdrehzahl des Motors und zum Zeitpunkt t₂ erreicht sie Null, d.h. das Fahrzeug steht still. Sei angenommen, dass die Abbremsung des Fahrzeugs bei nicht betätigtem Gaspedal 26, d.h. weitgehend geschlossener Drosselklappe 24 durch Betätigung des Bremspedals 28 abgebremst wird. Solange die Drehzahl n_{F} der Getriebeeinganswelle bzw. der Kupplungsausgangswelle über der kritischen Drehzahl n₂, wie beispielsweise der Leerlaufdrehzahl des Fahrzeugmotors 10 liegt, kann die Kupplung weitgehend geschlossen bleiben, damit das Fahrzeug zusätzlich vom Motor abgebremst wird. Sobald sich die Drehzahl n_{F} der Kupplungsausgangswelle der Drehzahl n₂ nähert, wird die Kupplung 12 vom Aktor 34 zunehmend geöffnet, so dass die Motordrehzahl n_{M} einer der strichpunktierten Kurven folgend zunehmend über der Kupplungsausgangsdrehzahl n_{F} liegt und von dieser entkuppelt auf die Leerlaufdrehzahl n₂ abnimmt. Bei stillstehendem Fahrzeug (Zeitpunkt t₁) läuft der Motor somit mit der Leerlaufdrehzahl n₂. Die Drehzahl n₁, bei deren Unterschreitung die Kupplung zunehmend geöffnet wird, um spätestens bei n₂ den Anfahrmodus zu erreichen, nimmt mit zunehmender Last des Motors zu:

Die doppelt punktierte Kurve stellt den Fall dar, in dem das Fahrzeug bei betätigtem Gaspedal seine Geschwindigkeit verlangsamt. In diesem Fall wird die Kupplung schon bei einer höheren Drehzahl n₁ geöffnet und lässt eine Differenz zwischen der in Folge der sich verlangsamenden Fahrzeuggeschwindigkeit abnehmenden Drehzahl n_{F} und der Drehzahl des Motors n_{M} zu, wodurch ein Ruckeln vermieden wird und das Fahrzeug komfortabel bis zum Stillstand abgebremst werden kann. Die doppelt gepunktete Kurve stellt der Verlauf der Motordrehzahl n_{M} für den Fall dar, dass das Gaspedal zumindest kurz vor Erreichen des Fahrzeugstillstandes nicht mehr betätigt wird, so dass die Motordrehzahl auf die Drehzahl n₂, die Leerlaufdrehzahl, absinkt. Die dreifach gepunktete Kurve stellt einen Fall dar, in dem das Gaspedal auch bei stillstehendem Fahrzeug, d.h. bei geöffneter Kupplung bzw. bei in den Anfahrmodus umgeschalteter Kupplung weiter betätigt wird, so dass die Motordrehzahl nicht bis auf die Leerlaufdrehzahl absinkt.

Der geschilderte Drehzahlverlauf kann sich auch bei nicht betätigtem Bremspedal einstellen, wenn die Fahrzeuggeschwindigkeit beim Bergauffahren wegen mangelnder Motorleistung absinkt.

Wie vorstehend ausgeführt, erfolgt erfindungsgemäß ein gleitender Übergang zwischen dem Fahrmodus der Kupplung (n_{F} und n_{M}) stimmen weitgehend überein; (schlupfarmer Betrieb) und dem Anfahrmodus der Kupplung (Kupplung ist zumindest weitgehend geöffnet, lässt einen hohen Schlupf zu und schließt bei vorliegen von Anfahrbedingungen), wobei der Übergang zwischen dem Fahrmodus und dem Anfahrmodus, d.h. das Öffnen der Kupplung mit zunehmender Motorlast bei zunehmend höherer Drehzahl der Kupplungsausgangswelle erfolgt. Bei nicht betätigtem Gaspedal erfolgt der Übergang vom Fahrmodus in den Anfahrmodus erst kurz vor dem Erreichen der Leerlaufdrehzahl, um das Bremsvermögen des Motors weitgehend zu nutzen.

Die Erfindung kann bei Handschaltgetrieben, automatisierten Handschaltgetrieben und automatischen Getrieben eingesetzt werden.

Wie aus Fig. 2 ersichtlich, liegt zwischen dem Fahrmodus, in dem die Kupplung auf weitgehend schlupffreiem Betrieb gesteuert wird, und dem Anfahrmodus, in dem die Kupplung geöffnet ist und bei einem nachfolgenden Anfahrvorgang geschlossen wird, ein Übergangsbereich, in dem die Kupplung beim Übergang vom Fahrmodus in den Anfahrmodus allmählich geöffnet wird. Der Anfahrmodus wird bei Verlangsamung des Fahrzeugs zumindest immer dann erreicht, wenn die Drehzahl der Ausgangswelle der Kupplung (Fahrzeugeingangswelle) unter eine kritische Drehzahl n₂, meistens die Leerlaufdrehzahl des Motors, abfällt. Der Übergangsbereich beginnt, wenn die Drehzahl der Ausgangswelle der Kupplung unter eine erste kritische Drehzahl n₁ abfällt, die von der Last abhängt, unter der der Motor läuft. Der Übergangsbereich zwischen dem Fahrmodus und dem Anfahrmodus wird somit mit abnehmender Last schmaler. Ohne Last kann ohne wesentlichen Übergangsbereich umgeschaltet werden.

Beispielsweise kann unter Verlangsamung bei Last bei einer Drehung der Eingangswelle von 1500 min⁻¹ der Schlupf derart gesteuert werden, dass er maximal bei 50 min⁻¹ liegt. Bei einer Drehzahl der Eingangswelle von 500 min⁻¹ kann ein Schlupf von 200 min⁻¹ vorhanden sein und bei stehender Eingangswelle entspricht der Schlupf der Leerlaufdrehzahl des Motors.

Bei Panikbremsungen, bei denen die Fahrzeuggeschwindigkeit bzw. die Drehzahl der Antriebswelle über einen Schwellwert hinaus zeitlich abnimmt, kann die Kupplung sofort geöffnet werden, so dass die Fahrzeugräder vom Antriebsmotor entkoppelt sind.

Der Anfahrmodus, bei dem die Kupplung vollständig oder zumindest weitgehend vollständig geöffnet ist, wird spätestens erreicht, wenn die Drehzahl der Eingangswelle des Fahrzeugs (Ausgangswelle der Kupplung) Null beträgt, d.h., das Fahrzeug bei eingelegtem Gang steht. Je nach Fahrbedingungen kann der Anfahrmodus insbesondere unter Last bereits bei noch drehender Eingangswelle aktiviert werden und beispielsweise bereits erreicht werden, wenn n_{F} = Leerlaufdrehzahl des Motors oder sogar leicht darüber. In diesem Fall wird der Motor keinesfalls unter seine Leerlaufdrehzahl gezwungen, was insbesondere bei Last zu Komforteinbußen führen kann.

### Bezugszeichenliste

- 10: Fahrzeugmotor
- 12: Kupplung
- 14: Schaltgetriebe
- 16: Kardanwelle
- 18: Differential
- 20: Antriebswelle
- 22: Hinterrad
- 24: Laststellglied
- 26: Gaspedal
- 28: Bremspedal
- 32: Schalthebelgruppe
- 34: Kupplungsaktor
- 36: Kupplungssteuergerät
- 40: Laststellgliedaktor
- 42: Motorsteuergerät
- 44: Sensor
- 48: Drehzahlsensor
- 50: Gangsensor
- 52: Raddrehzahlsensor
- 54: Raddrehzahlsensor
- 56: Sensor
- 58: BUS-System

## Patentansprüche

1. Verfahren zum Steuern einer zwischen einer Ausgangswelle eines Fahrzeugmotors (10) und einer Eingangswelle eines Fahrzeuggetriebes (14) angeordneten Kupplung (12), bei welchem Verfahren die Kupplung bei Vorliegen bestimmter erster Bedingungen in einem Fahrmodus mit keinem oder geringem Schlupf betrieben wird, bei Abfallen der Drehzahl der Eingangswelle unter eine erste kritische Drehzahl (41- n1) und Annäherung an eine zweite kritische Drehzahl (42 n2) mit zunehmendem Schlupf betrieben wird und bei Abfallen der Drehzahl unter die zweite kritische Drehzahl in einem Anfahrmodus mit hohem Schlupf und geringem Drehmomentübertragungsvermögen betrieben wird, aus dem heraus die Kupplung nach einem Anfahren in dem Fahrmodus betrieben wird, wobei die erste kritische Drehzahl (n1) mit höherer Last des Fahrzeugmotors zunimmt
**dadurch gekennzeichnet dass**
die zweite kritische Drehzahl (n2) etwa die Leerlaufdrehzahl des Fahrzeugmotors ist, und
dass der Übergangsbereich zwischen dem Fahrmodus und dem Anfahrmodus somit mit abnehmender Last schmaler wird.

2. Verfahren nach Anspruch 1, wobei die zweite kritische Drehzahl Null ist.

3. Verfahren nach einem der Ansprüche 1 bis 2, wobei die Kupplung (12) bei über einem Schwellenwert liegender zeitlicher Abnahme der Drehzahl der Antriebswelle mit hohem Schlupf betrieben wird.

4. System zum Steuern einer zwischen einer Ausgangswelle eines Fahrzeugmotors (10) und einer Eingangswelle des Fahrzeugs angeordneten Kupplung (12) enthaltend
einen Aktor (34) zum Betätigen der Kupplung,
Sensoren (44, 48, 50, 52, 54, 56) zum Erfassen von Betriebsparametern des Fahrzeugs und
ein elektronisches Steuergerät (36) zum Steuern des Aktors in Abhängigkeit von den Betriebsparametern des Fahrzeugs, wobei das Steuergerät den Aktor entsprechend einem Verfahren nach einem der Ansprüche 1 bis 3 steuert.

## Claims

1. Method for controlling a clutch (12) which is arranged between an output shaft of a vehicle engine (10) and an input shaft of a vehicle gearbox (14), in which method, in the presence of certain first conditions, the clutch is operated in a driving mode with no slip or a small amount of slip, if the rotational speed of the input shaft falls below a first critical rotational speed (n1) and approaches a second critical rotational speed (n2), the clutch is operated with increasing slip, and if the rotational speed falls below the second critical rotational speed, the clutch is operated in a starting mode with a large amount of slip and low torque transmission capability, proceeding from which starting mode the clutch is operated in the driving mode after a starting process, wherein the first critical rotational speed (n1) increases with increasing load of the vehicle engine,
**characterized in that**
the second critical rotational speed (n2) is approximately the idle rotational speed of the vehicle engine, and
**in that** the transition region between the driving mode and the starting mode therefore becomes narrower with decreasing load.

2. Method according to Claim 1, wherein the second critical rotational speed is zero.

3. Method according to either of Claims 1 and 2, wherein, if a decrease of the rotational speed of the drive shaft over time exceeds a threshold value, the clutch (12) is operated with a large amount of slip.

4. System for controlling a clutch (12) which is arranged between an output shaft of a vehicle engine (10) and an input shaft of the vehicle, comprising an actuator (34) for actuating the clutch,
sensors (44, 48, 50, 52, 54, 56) for detecting operating parameters of the vehicle, and
an electronic control unit (36) for controlling the actuator as a function of the operating parameters of the vehicle, wherein the control unit controls the actuator in accordance with a method according to one of Claims 1 to 3.

## Revendications

1. Procédé de commande d'un embrayage (12) disposé entre un arbre de sortie d'un moteur de véhicule (10) et un arbre d'entrée d'une transmission de véhicule (14), dans lequel procédé l'embrayage est entraîné dans un mode de conduite sans glissement ou avec un faible glissement en présence de premières conditions déterminées, est entraîné avec un glissement croissant en cas de diminution de la vitesse de rotation de l'arbre d'entraînement en dessous d'une première vitesse de rotation critique (n1) et en cas de rapprochement d'une deuxième vitesse de rotation critique (n2), et est entraîné dans un mode de démarrage avec un glissement élevé et une faible capacité de transfert de couple en cas de diminution de la vitesse de rotation en dessous de la deuxième vitesse de rotation critique, l'embrayage étant entraîné hors de ce mode dans le mode de conduite après un démarrage, la première vitesse de rotation critique (n1) augmentant avec l'augmentation de la charge du moteur du véhicule, **caractérisé en ce que**
la deuxième vitesse de rotation critique (n2) est approximativement la vitesse de rotation de ralenti du moteur du véhicule, et
la plage de transition entre le mode de conduite et le mode de démarrage devient ainsi de plus en plus étroite avec la diminution de la charge.

2. Procédé selon la revendication 1, dans lequel la deuxième vitesse de rotation critique est nulle.

3. Procédé selon la revendication 1 ou 2, dans lequel l'embrayage (12), en cas de diminution dans le temps au-delà d'une valeur de seuil de la vitesse de rotation de l'arbre d'entraînement, est entraîné avec un glissement croissant.

4. Système de commande d'un embrayage (12) disposé entre un arbre de sortie d'un moteur de véhicule (10) et un arbre d'entrée du véhicule,
contenant
un actionneur (34) pour l'actionnement de l'embrayage,
des capteurs (44, 48, 50, 54, 56) pour détecter des paramètres de fonctionnement du véhicule, et un appareil de commande électronique (36) pour commander l'actionneur en fonction des paramètres de fonctionnement du véhicule, l'appareil de commande commandant l'actionneur en fonction d'un procédé selon l'une quelconque des revendications 1 à 3.
